# FASCICULE DE BREVET EUROPEEN

(11) **EP 3 368 348 B1**
(45) Date de publication et mention de la délivrance du brevet: **08.07.2020**
(21) Numéro de dépôt: 16785517.0
(22) Date de dépôt: 26.10.2016
(51) Int. Cl.: B60C 11/04, B60C 9/00, B60C 9/20, B60C 9/22, B60C 11/13

(54) **PNEUMATIQUE À COUCHES DE TRAVAIL COMPRENANT DES MONOFILAMENTS ET À BANDE DE ROULEMENT RAINURÉE**
LUFTREIFEN MIT ARBEITSSCHICHTEN AUS MONOFILAMENTEN UND EINER REIFENLAUFFLÄCHE MIT RILLEN
PNEUMATIC TIRE, HAVING WORKING LAYERS COMPRISING MONOFILAMENTS AND A TIRE TREAD WITH GROOVES

(30) Priorité: 27.10.2015 FR 1560238
(43) Date de publication de la demande: 05.09.2018
(73) Titulaire: Compagnie Générale des Etablissements Michelin, 63000 Clermont-Ferrand (FR)
(72) Inventeur: BONNET, Aymeric, 63040 Clermont-Ferrand Cedex 9 (FR); MOREL-JEAN, Jacques, 63040 Clermont-Ferrand Cedex 9 (FR); DEROBERT-MAZURE, Jean-Charles, 63040 Clermont-Ferrand Cedex 9 (FR)
(74) Mandataire: Millanvois, Patrick Jacques Jean
(86) Numéro de dépôt international: PCT/EP2016/075741
(87) Numéro de publication internationale: WO 2017/072151

(56) Documents cités:
- EP-A1- 2 210 749
- EP-A1- 2 610 080
- WO-A1-2015/014575
- FR-A1- 3 032 149

## Description

### DOMAINE DE L'INVENTION

La présente invention concerne un pneumatique de véhicule de tourisme et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est appelée surface de roulement et dont la plus radialement intérieure est appelée surface de fond de sculpture. De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement, comprenant au moins une armature de travail, composée d'au moins une couche de travail composée d'éléments de renforcement parallèles les uns aux autres et formant un angle avec la direction circonférentielle compris entre 15° et 50°. L'armature de sommet peut également comprendre au moins une couche de frettage radialement extérieure aux couches de travail comprenant des éléments de renforcement formant avec la direction circonférentielle un angle compris entre 0° et 10°.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement. Un puits n'a, sur la surface de roulement, aucune dimension principale caractéristique. Une incision ou une rainure présente deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond les deux faces latérales étant distantes l'une de l'autre d'une distance non nulle, dite largeur W de l'incision ou de la rainure.

Par définition, une incision ou une rainure qui est délimitée par :
- uniquement deux faces latérales principales, est dite débouchante,
- par trois faces latérales, dont deux principales déterminant la longueur de la découpure, est dite borgne,
- par quatre faces latérales, dont deux principales déterminant la longueur de la découpure, est dite aveugle.

La différence entre une incision et une rainure est la valeur prise par la distance moyenne séparant les deux faces latérales principales de la découpure, à savoir sa largeur W. Dans le cas d'une incision, cette distance est appropriée pour permettre la mise en contact des deux faces latérales principales en vis-à-vis lors du passage de l'incision dans le contact avec la chaussée. Dans le cas d'une rainure, les faces latérales principales de cette rainure ne peuvent pas venir en contact l'une contre l'autre dans les conditions usuelles de roulage. Cette distance pour une incision est généralement pour les pneumatiques de véhicule de tourisme au plus égale à 1 millimètre (mm). Un sillon circonférentiel est une découpure de direction sensiblement circonférentielle sensiblement continue sur toute la circonférence du pneumatique.

Plus précisément, la largeur W est la distance moyenne, déterminée sur la longueur de la découpure et sur une portion radiale de la découpure comprise entre une première surface circonférentielle, radialement intérieure à la surface de roulement à une distance radiale de 1 mm, et une deuxième surface circonférentielle, radialement extérieure à la surface de fond à une distance radiale de 1 mm, afin d'éviter tout problème de mesure lié au raccordement des deux faces latérales principales avec la surface de roulement et la surface de fond.

La profondeur de la découpure est la distance radiale maximale entre la surface de roulement et le fond de la découpure. La valeur maximale des profondeurs des découpures est nommée profondeur de sculpture D. La surface de fond de sculpture, ou surface de fond, est définie comme la surface translatée de la surface de roulement radialement vers l'intérieur d'une distance radiale égale à la profondeur de sculpture.

### ETAT DE LA TECHNIQUE

Dans le contexte actuel de développement durable, l'économie de ressources et donc de matières premières est un des objectifs majeurs des industriels. Pour les pneumatiques de véhicule de tourisme, une des voies de recherche pour cet objectif, consiste à remplacer les câbles métalliques habituellement utilisés comme éléments de renforcement de différentes couches de l'armature de sommet par des fils unitaires ou monofilaments tels que décrits dans le document EP 0043563 dans lequel ce type d'éléments de renforcement est utilisé dans un double objectif de gain de masse et de résistance au roulement.

Cependant l'utilisation de ce type d'éléments de renforcement présente l'inconvénient d'entraîner un problème de flambement en compression de ces monofilaments amenant une endurance insuffisante du pneumatique comme le décrit le document EP2537686**.** Ainsi que le décrit ce même document, l'homme de l'art propose une disposition particulière des différentes couches de l'armature de sommet et une qualité spécifique des matériaux composant les éléments de renforcement de l'armature de sommet pour résoudre ce problème.

Une analyse du phénomène physique montre que le flambage des monofilaments a lieu dans les parties les plus axialement extérieures de la bande de roulement sous les rainures comme le mentionne le document JP 2012071791**.** Cette zone du pneumatique a comme particularité d'être soumise à des efforts de compression élevés dans les trajectoires courbes du véhicule. La résistance au flambement des monofilaments dépend de la géométrie des rainures, montrant ainsi l'influence étonnante de la sculpture sur l'endurance des monofilaments.

Le document WO2015/014575 montre un pneumatique avec une armature de sommet similaire à celle de l'invention mais il reste silencieux par rapport aux détails des rainures de la bande de roulement.

### EXPOSE DE L'INVENTION

L'objectif principal de la présente invention est donc d'augmenter l'endurance d'un pneumatique dont les éléments de renforcement des couches de travail sont composés de monofilaments par la conception d'une sculpture adaptée de la bande de roulement.

Cet objectif est atteint par un pneumatique pour véhicule de tourisme, comprenant :
- une bande de roulement destinée à entrer en contact avec un sol par l'intermédiaire d'une surface de roulement et ayant une largeur axiale LT,
- la bande de roulement comprenant deux portions axialement extérieures ayant chacune une largeur axiale (LS1, LS2) au plus égale à 0.3 fois la largeur axiale LT,
- au moins une portion axialement extérieure comprenant au moins un sillon longitudinal, et des rainures axialement extérieures, une rainure axialement extérieure formant un espace débouchant sur la surface de roulement et étant délimitée par au moins deux faces latérales dites principales reliées par une face de fond, rainures dont au moins une est débouchante intérieurement, formant un espace débouchant également dans le sillon circonférentiel,
- au moins une rainure axialement extérieure, dite majeure, ayant une largeur W définie par la distance entre leurs deux faces latérales principales, au moins égale à 1mm, une profondeur D définie par la distance radiale maximale entre la surface de roulement et la face de fond, au moins égale à 5 mm,
- Le pneumatique comprenant en outre une armature de sommet radialement intérieure à la bande de roulement,
- l'armature de sommet comprenant une armature de travail et une armature de frettage,
- l'armature de travail comprenant au moins deux couches de travail, comprenant chacune des éléments de renforcement enrobés par un matériau élastomérique, parallèles entre eux et formant respectivement avec une direction circonférentielle (XX') du pneumatique, un angle orienté (A1, A2) au moins égal à 20° et au plus égale à 50°, en valeur absolue et de signe opposé d'une couche à la suivante,
- les dits éléments de renforcement de chaque couche de travail étant constitués par des fils métalliques unitaires ou monofilaments ayant une section dont la plus petite dimension est au moins égale à 0.20 mm et au plus égale à 0.5 mm, une résistance à la rupture Rm,
- la densité d'éléments de renforcement de chaque couche de travail étant au moins égale à 100 fils par dm et au plus égale à 200 fils par dm,
- l'armature de frettage comprenant au moins une couche de frettage comprenant des éléments de renforcement, parallèles entre eux et formant, avec la direction circonférentielle (XX') du pneumatique, un angle au plus égal à 10° en valeur absolue,
- une rainure majeure axialement extérieure et débouchante intérieurement de la bande de roulement comprenant au moins un pont de gomme reliant les deux faces principales de la rainure et le au moins un pont de gomme ayant une longueur cumulée LB au moins égale à la largeur W de la rainure et une hauteur h radiale au moins égale à la moitié de la profondeur D de la rainure,
- la résistance à rupture R_{C} de chaque couche de travail est au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

Pour les rainures de forme complexe, on entend par largeur de la rainure la distance moyenne des faces latérales principales moyennée sur la longueur curviligne de la rainure.

Du point de vue du fonctionnement mécanique, le flambement d'un élément de renforcement se produit en compression. Il ne se produit que radialement à l'intérieur des portions les plus axialement extérieures de la bande de roulement car c'est dans cette zone que les efforts de compression sont les plus importants en cas d'effort transversal. Ces portions ont chacune pour largeur axiale maximale 0.3 fois la largeur totale de la bande de roulement du pneumatique.

Le flambement est un phénomène complexe et instable qui conduit à une rupture par fatigue d'un objet ayant au moins une dimension d'un ordre de grandeur inférieur à une dimension principale comme les poutres ou les coques. Les monofilaments sont des objets de ce type avec une section très inférieure à leur longueur. Le phénomène commence par une compression de la dimension principale. Il se poursuit en raison d'une dissymétrie de la géométrie du monofilament, ou de l'existence d'un effort transverse par une mise en flexion du monofilament, sollicitation très destructrice pour les matériaux métalliques. Ce phénomène complexe est notamment très dépendant des conditions aux limites, de la mobilité de l'élément, de la direction de l'effort appliqué et de la déformation résultante de cet effort.

De plus le flambement des monofilaments des couches de travail ne se produit que sous les rainures axialement extérieures de la bande de roulement car en absence de rainure axialement extérieure, le matériau caoutchouteux de la bande de roulement radialement extérieur à l'élément de renforcement reprend la majeure partie de l'effort compression. De même les rainures axialement extérieures dont la profondeur est inférieure à 5 mm, n'ont pas d'influence sur le flambement des monofilaments. Donc seules les rainures axialement extérieures dites majeures doivent être soumises à des règles de conception particulières lors de l'utilisation de monofilaments dans les couches de travail. Ces rainures majeures axialement extérieures sont en particulier essentielles pour la performance du pneumatique en adhérence sur sol mouillé.

Par ailleurs les rainures axialement extérieures dont la largeur est inférieure à 1 mm, appelées incisions, se ferment dans l'aire de contact et donc protègent les monofilaments du flambement. Pour les rainures non axialement extérieures, l'effort de compression en cas d'effort transversal sur le pneumatique est trop faible pour provoquer le flambement. Par ailleurs il est courant sur les pneumatiques pour véhicule de tourisme que seules des incisions d'une largeur inférieure à 1 mm soient disposées dans les parties axialement centrales de la bande de roulement.

Dans les directions où aucun espace vide ne permet de déplacement, les efforts de compression vont être repris par le mélange caoutchouteux. Quand une rainure majeure axialement extérieure est présente, celle-ci n'absorbe pas les efforts mais au contraire autorise les déplacements en compression dans la direction perpendiculaire à la direction moyenne des faces latérales principales. Dans le cas d'une bande de roulement dans laquelle sont disposés des sillons sensiblement circonférentiels afin d'obtenir des performances en adhérence sur sol mouillé, il est courant que les rainures axialement extérieures débouches dans le sillon afin de constituer un réservoir de stockage de l'eau. Plus encore, il est courant de rendre les rainures intérieurement débouchantes également extérieurement débouchantes afin qu'elles autorisent l'évacuation de l'eau située sous l'aire de contact vers l'extérieur. Dans ces deux cas, la géométrie des rainures majeures favorisent la mise en compression des monofilaments des couches de travail.

Pour éviter cette mise en compression, la solution proposée par les inventeurs consiste à positionner dans les rainures majeures axialement extérieures et débouchantes intérieurement au moins un pont de gomme ayant une longueur moyenne cumulée LB au moins égale à la largeur W de la rainure et une hauteur h au moins égale à la moitié de la profondeur D de la rainure.

La hauteur du pont de gomme est la distance entre la surface de fond de la rainure et le point le plus radialement extérieur du pont de gomme. La longueur d'un pont de gomme est la longueur curviligne des faces principales de la rainure le long de laquelle est présent le pont de gomme. En cas de différence entre les longueurs curvilignes sur les deux faces principales de la rainure, la longueur du pont de gomme sera égale à la moyenne des longueurs. Si l'une des arêtes du pont de gomme comprend un chanfrein, la longueur du pont de gomme sera évaluée par une moyenne calculée sur sa hauteur. La longueur est dite cumulée car en cas de pont de gomme multiples, les longueurs des différents ponts de gomme seront additionnées pour obtenir la longueur totale cumulée qui doit être au moins égale à W pour que le pont de gomme n'ait pas lui-même une dimension principale dans la direction permettant la compression des monofilaments des couches de travail. D'un point de vue mécanique, une pluralité de ponts de gomme est plus efficace qu'un seul pont de gomme de même longueur cumulée. De même, pour une protection efficace des monofilaments, la hauteur radiale h du pont de gomme doit être au moins égale à la moitié de la profondeur D de la rainure. En cas de ponts de gomme multiples, toutes les hauteurs des différents ponts de gomme doivent être au moins égales à la moitié de la profondeur D de la rainure.

Les monofilaments peuvent avoir toute forme de section, sachant que les sections oblongues représentent un avantage sur les sections circulaires de même plus petite dimension car leur inertie de flexion et donc leur résistance au flambement sont supérieures. Pour une section circulaire, la plus petite dimension correspond au diamètre de la section. Pour garantir une résistance à rupture en fatigue des monofilaments et la tenue au cisaillement des mélanges caoutchouteux situés entre les filaments, la densité d'éléments de renforcement de chaque couche de travail est au moins égale à 100 fils par dm et au plus égale à 200 fils par dm. Par densité on entend le nombre moyen de monofilaments sur une largeur de couche de travail de 10 cm, cette largeur étant prise perpendiculairement à la direction des monofilaments de la couche de travail considérée. La distance entre des éléments de renforcement consécutifs peut être fixe ou variable. La pose des éléments de renforcement en fabrication peut être effectuée par couche, par bandelette ou de façon unitaire.

Par ailleurs la résistance au flambement d'un monofilament dépend également de la résistance des filaments axialement adjacents, un début de flambement pouvant en entraîner un autre par l'effet d'une répartition de la charge autour du monofilament qui flambe. Pour obtenir une performance en endurance améliorée, il convient non seulement d'observer des conditions de diamètres et de la densité des monofilaments mais également remplir une condition portant sur la résistance de la couche de travail à savoir la résistance à rupture R_{C} de chaque couche de travail qui doit être au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

Pour un pneumatique pour lequel aucun sens de montage n'est imposé, la solution consiste à appliquer l'invention sur les deux portions les plus axialement extérieures de la bande de roulement.

Pour un pneumatique pour lequel un sens de montage est imposé, une possibilité est de n'appliquer l'invention que sur la portion la plus axialement extérieure de la bande de roulement, située côté extérieur véhicule.

Les sculptures des bandes de roulement de pneumatiques de véhicule de tourisme sont habituellement soit sensiblement symétriques, soit sensiblement antisymétriques, soit sensiblement asymétriques.

Il est avantageux que toute rainure majeure axialement extérieure ait une largeur W au plus égale à 10 mm afin de limiter le volume de creux de la bande de roulement et préserver le potentiel d'usure du pneumatique.

Préférentiellement, les rainures majeures axialement extérieures ont une profondeur D au plus égale à 8 mm. En effet au-delà d'une certaine épaisseur de gomme, la bande de roulement devient trop souple et le pneumatique perd en performance usure, comportement et résistance au roulement.

Il est particulièrement avantageux qu'une rainure majeure axialement extérieure débouche axialement à l'extérieur de la bande de roulement afin de permettre à l'eau d'être évacuée hors de l'aire de contact par le pneumatique lors du roulage afin d'assurer une bonne performance d'adhérence sur route mouillée et d'éviter ainsi le phénomène d'hydroplanage.

Préférentiellement les rainures majeures axialement extérieures sont espacées, selon la direction circonférentielle (XX') du pneumatique, d'un pas circonférentiel P au moins égal à 8 mm, pour éviter une trop grande souplesse de la sculpture et des pertes de performance en usure et en résistance au roulement. Le pas circonférentiel est la distance circonférentielle moyenne sur la partie la plus axialement extérieure considérée de la bande de roulement entre deux faces latérales de deux rainures axialement extérieures circonférentiellement consécutives. Habituellement, les bandes de roulement des pneumatiques peuvent présenter des pas variables notamment pour limiter le bruit lors du roulage.

Une solution préférée consiste également à ce que les rainures majeures axialement extérieures soient espacées, selon la direction circonférentielle (XX') du pneumatique, d'un pas circonférentiel P au plus égal à 50 mm, afin de garantir par un taux d'entaillement volumique de la bande de roulement suffisant, l'adhérence du pneumatique sur route mouillée.

Il est particulièrement avantageux que la face de fond d'une rainure majeure axialement extérieure et débouchante intérieurement soit positionnée radialement à l'extérieur de l'armature de sommet à une distance radiale D1 au moins égale à 1.5 mm. En effet cette quantité minimale de matériaux caoutchouteux permet de protéger le sommet des agressions et des perforations par des obstacles, cailloux, débris quelconques se trouvant sur le sol.

Il est préféré que la face de fond d'une rainure majeure axialement extérieure soit positionnée radialement à l'extérieur de l'armature de sommet à une distance radiale D1 au plus égale à 3.5 mm pour obtenir un pneumatique performant en résistance au roulement.

Préférentiellement au moins un pont de gomme d'une rainure majeure axialement extérieure et débouchante intérieurement, ayant une largeur Wmin au moins égale à 1,5 mm, comprend au moins une incision ayant une largeur W1 au plus égale à 1 mm et une profondeur h1 au moins égale à h/2 et au plus égale à h, h étant la hauteur radiale du pont de gomme. En effet le pont de gomme protège les monofilaments de l'armature de travail en travaillant en compression mais sa présence augmente l'énergie nécessaire à la mise à plat du pneumatique, il a donc un effet négatif sur la résistance au roulement. Une solution à ce problème est de pratiquer dans le pont de gomme une incision de faible épaisseur W1, ne modifiant que peu son comportement en compression et facilitant la mise à plat du pneumatique.

Un pont de gomme d'une rainure axialement extérieure et débouchante intérieurement ayant une arête axialement extérieure, une solution préférée est que l'arête axialement extérieure du pont de gomme comprenne un chanfrein afin de faciliter l'écoulement de l'eau sur route mouillée.

Il est avantageux qu'au moins une portion axialement extérieure, comprenant des rainures majeures axialement extérieures, comprenne des incisions ayant une largeur W2 au plus égale à 1 mm. Pour améliorer l'adhérence sur certains types de sols notamment des sols verglacés ou enneigés, il est possible de disposer dans les portions axialement extérieures de la bande de roulement des incisions de faible largeur sans dégrader l'endurance du pneumatique dont l'armature de travail contient des monofilaments. En effet lors du passage dans l'aire de contact, les faces latérales de ces incisions viennent en contact et le matériau caoutchouteux de la bande de roulement reprend alors les efforts de compression. Ces incisions peuvent avoir des largeurs variables dans leurs directions principales ou dans leur profondeur tant que leur largeur minimale est au plus égale à 1 mm sur une surface suffisante au moins égale à 50 mm².

Il est également possible de disposer des rainures de faible profondeur, inférieure à 5 mm, sans dégrader de manière significative l'endurance du pneumatique mais dans ce cas, la performance notamment d'adhérence sur sol mouillé se dégrade avec l'usure du pneumatique.

Avantageusement les deux portions axialement extérieures de la bande de roulement ont chacune une largeur axiale (LS1, LS2) au plus égale à 0.2 fois la largeur axiale LT de la bande de roulement.

Préférentiellement chaque couche de travail comprend des éléments de renforcement constitués par des fils métalliques unitaires ou monofilaments ayant une section dont la plus petite dimension est au moins égale à 0.3 mm et au plus égale à 0.37 mm qui constituent un optimum pour l'équilibre des performances visées : le gain de masse et l'endurance au flambement des éléments de renforcement des couches de travail.

Une solution préférée est que chaque couche de travail comprenne des éléments de renforcement formant, avec la direction circonférentielle (XX') du pneumatique, un angle dont la valeur absolue est au moins égal à 22° et au plus égal à 35° qui constituent un compromis optimal entre les performances de comportement et d'endurance du pneumatique.

Il est avantageux que la densité d'éléments de renforcement de chaque couche de travail soit au moins égale à 120 fils par dm et au plus égale à 180 fils par dm afin de garantir une endurance améliorée des mélanges caoutchouteux travaillant en cisaillement entre les éléments de renforcement et l'endurance de ces derniers en traction et compression.

Les éléments de renforcement des couches de travail peuvent être rectilignes ou non. Ils peuvent être préformés, de forme sinusoïdale, zigzag, ondulée ou suivant une spirale. Les éléments de renforcement des couches de travail sont en acier, de préférence en acier au carbone tel que ceux utilisés dans les câbles de type "steel cords" ; mais il est bien entendu possible d'utiliser d'autres aciers, par exemple des aciers inoxydables, ou d'autres alliages.

Lorsqu'un acier au carbone est utilisé, sa teneur en carbone (% en poids d'acier) est de préférence comprise dans un domaine de 0,8% à 1,2%. L'invention s'applique en particulier à des aciers du type steel cord à très haute résistance "SHT" (" Super High Tensile "), ultra-haute résistance "UHT" ("Ultra High Tensile ") ou "MT" ("Mega Tensile "). Les renforts en acier au carbone ont alors une résistance à la rupture en traction (Rm) qui est de préférence supérieure à 3000 MPa, plus préférentiellement supérieure à 3500 MPa. Leur allongement total à la rupture (At), somme de l'allongement élastique et de l'allongement plastique, est de préférence supérieur à 2,0%.

Pour ce qui concerne les renforts en acier, les mesures de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en oeuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que, lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Préférentiellement les éléments de renforcement de la au moins une couche de frettage sont en textile de type polyamide aliphatique, polyamide aromatique, combinaison de polyamide aliphatique et de polyamide aromatique, polytéréphtalate d'éthylène ou rayonne car les matériaux textiles sont particulièrement adaptés à ce type d'usage en raison de leur faible masse et de leur rigidité élevée. La distance entre des éléments de renforcement consécutifs de la couche de frettage peut être fixe ou variable. La pose des éléments de renforcement en fabrication peut être effectuée par couche, par bandelette ou de façon unitaire.

Il est avantageux que l'armature de frettage soit radialement extérieure à l'armature de travail pour une bonne tenue de cette dernière en endurance.

### BREVE DESCRIPTION DES DESSINS

Les caractéristiques et autres avantages de l'invention seront mieux compris à l'aide des figures 1 à 6, les dites figures n'étant pas représentées à l'échelle mais de façon simplifiée, afin de faciliter la compréhension de l'invention :
- La figure 1 est une vue en perspective représentant une partie de pneumatique selon l'invention, en particulier son architecture et sa bande de roulement.
- La figure 2 représente une coupe méridienne du sommet et illustre les parties axialement extérieures 22 et 23 de la bande de roulement, ainsi que leur largeur.
- Les figures 3A et 3B présentent deux types de profil méridien radialement extérieur de la bande de roulement d'un pneumatique tourisme.
- Les figures 4a, 4b illustrent différents types de ponts de gomme uniques ou multiples.
- Les figure 5a, 5b, 5c illustrent une méthode de détermination des rainures majeures en cas de réseau de rainures.
- La figure 6 illustre les termes 'bord intérieur' et 'bord extérieur' d'une bande de roulement.

### DESCRIPTION DETAILLEE DES DESSINS

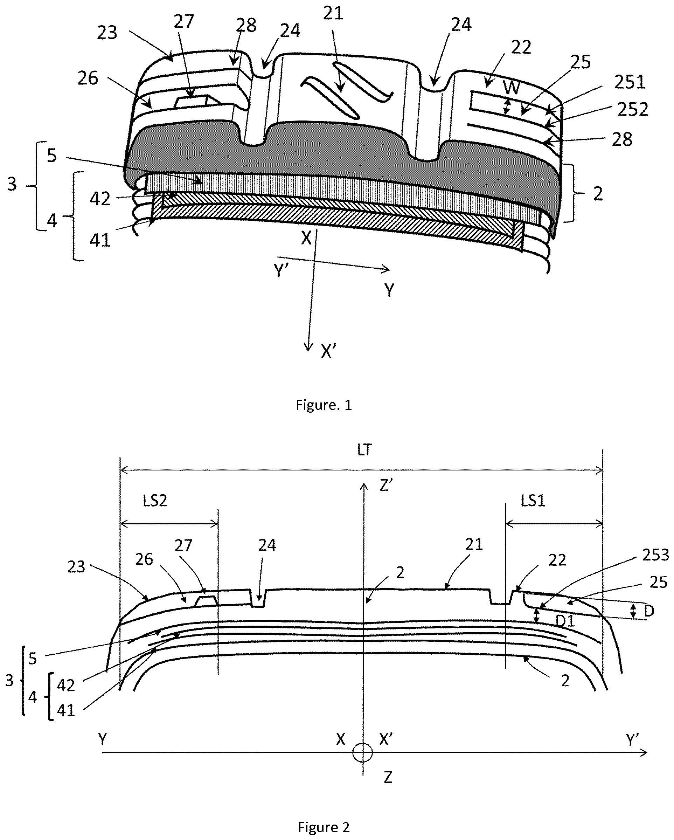

La figure 1 représente une partie du sommet d'un pneumatique. Le pneumatique comporte une bande de roulement 2 destinée à entrer en contact avec un sol par l'intermédiaire d'une surface de roulement 21. Dans les parties axialement extérieures 22 et 23 de la bande de roulement, sont disposées des sillons circonférentiels 24 et rainures majeures axialement extérieures 25 et 26 de largeur W et dont l'une 26 est axialement intérieurement débouchante 26. Celle-ci comporte un pont de gomme 27. La bande de roulement comporte également des incisions 28 ayant une largeur W2 au plus égale à 1 mm. Le pneumatique comprend en outre une armature de sommet 3 comprenant une armature de travail 4 et une armature de frettage 5. L'armature de travail comprend deux couches de travail 41 et 42 41 et 42 comprenant chacune des éléments de renforcement parallèles entre eux, formant respectivement avec une direction circonférentielle (XX') du pneumatique, un angle orienté au moins égal à 20° et au plus égal à 50° en valeur absolue et de signe opposé d'une couche à la suivante.

La figure 1 représente dans les parties axialement extérieures 22 et 23 de la bande de roulement, uniquement des rainures axialement extérieures axiales, suivant l'axe axial (YY'). En réalité cette représentation est de pure convenance pour la lisibilité de la figure 1, les rainures axialement extérieures dans les bandes de roulement des véhicules de tourisme pouvant, en fonction des performances visées, notamment en adhérence sur sol mouillé, faire un angle avec la direction axiale (YY') entre plus ou moins 60°.

Par ailleurs, la sensibilité des monofilaments des couches de travail au flambage dépend des angles relatifs entre les rainures axialement extérieures et les monofilaments. Les angles relatifs entre les rainures axialement extérieures et les monofilaments, les plus pénalisants pour cette performance sont égaux à 90°. Sachant que les angles des monofilaments avec l'axe circonférentiel est compris entre 20° et 50°, les angles des rainures axialement extérieures avec l'axe transversal (YY') pour lesquels l'invention est la plus effective, est compris entre 20° et 50° modulo pi. Cependant l'invention permet aussi d'améliorer la performance en endurance au flambage des monofilaments, lorsque les rainures sont axiales.

La figure 2 représente schématiquement, la coupe méridienne, du sommet du pneumatique selon l'invention. Elle illustre en particulier les largeurs LS1 et LS2 des portions axialement extérieures 22 et 23 de la bande de roulement, ainsi que la largeur totale du pneumatique LT. Sont représentées également le sillon longitudinal 24, la profondeur D d'une rainure axialement extérieure 25, 26 et la distance D1 entre la face de fond 253 de toute rainure 25, 26 et l'armature de sommet 3, mesurée sur une coupe méridienne du pneumatique. La figure 2 illustre également un pont de gomme 27 ainsi que l'armature de sommet 3. Une coupe méridienne du pneumatique, est obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé.

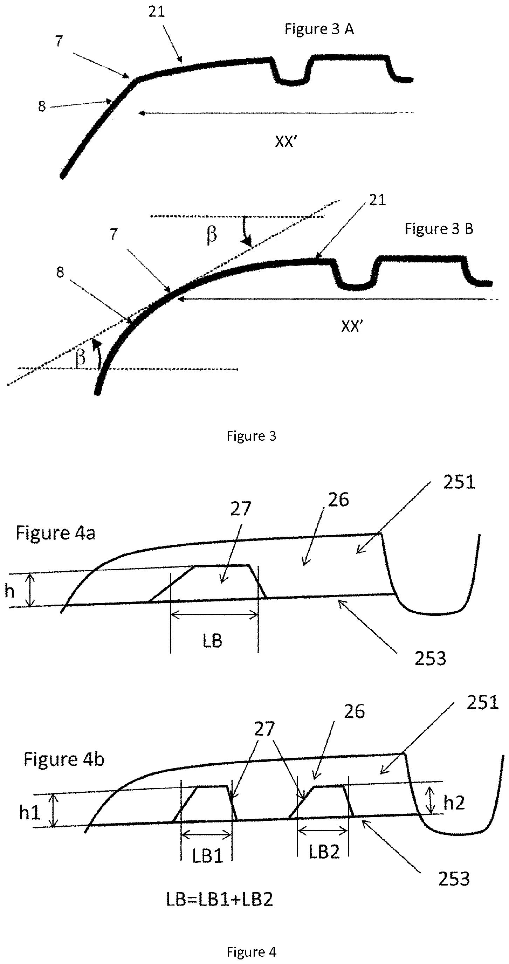

Sur les figures 3A et 3B, on détermine les bords axiaux 7 de la bande de roulement qui permettent de mesurer la largeur bande de roulement. Dans la figure 3A où la surface de roulement 21 est sécante avec la surface axiale extérieure du pneumatique 8, le bord axial 7 est trivialement déterminé par l'homme de l'art. Dans la figure 3B où la surface de roulement 21 est continue avec la surface axiale extérieure du pneumatique 8, on trace, sur une coupe méridienne du pneumatique, la tangente à la surface de roulement en tout point de ladite surface de roulement dans la zone de transition vers le flanc. Le premier bord axial 7 est le point pour lequel l'angle β (beta) entre ladite tangente et une direction axiale est égal à 30°. Lorsqu'il existe plusieurs points pour lesquels l'angle β entre ladite tangente et une direction axiale YY' est égal à 30°, on retient le point radialement le plus à l'extérieur. On procédera de la même manière pour déterminer le second bord axial de la bande de roulement.

Les figures 4a et 4b représentent schématiquement des rainures majeures 26 axialement extérieures et débouchantes intérieurement d'une bande de roulement 2 munies de ponts de gomme. La figure 4a illustre le cas d'un pont de gomme unique chanfreiné, de hauteur radiale h et de longueur moyenne LB. La figure 4b illustre le cas de ponts de gomme multiples, de hauteurs radiales h1 et h2 au moins égales à la moitié de la profondeur D et de longueur moyenne cumulée LB égale à la somme des longueurs moyennes des différents ponts de gomme.

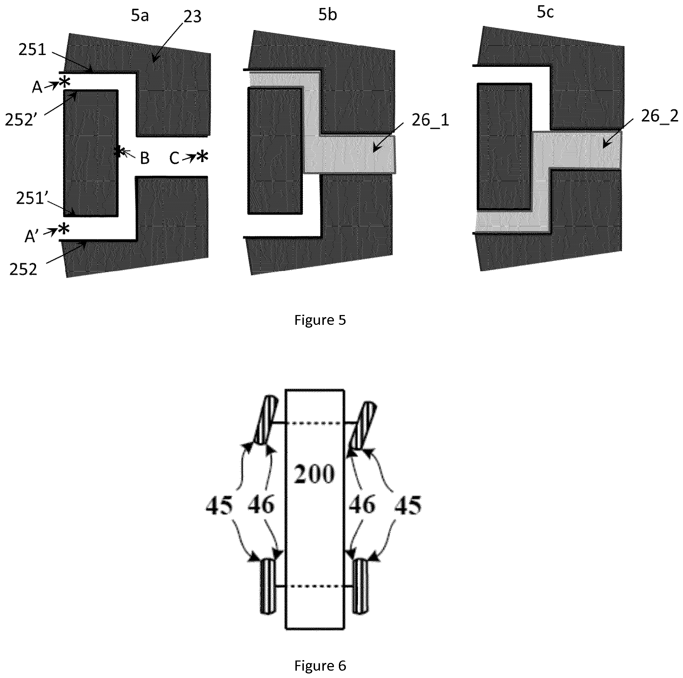

Les figures 5a, 5b, 5c illustrent une méthode de détermination des rainures majeures dans le cas d'un réseau de rainures. Pour certaines sculptures, des rainures sont débouchantes dans d'autres rainures comme l'illustre la figure 5a. Dans ce cas on déterminera les faces latérales du réseau qui sont les faces latérales continues les plus circonférentiellement éloignées l'une de l'autre du réseau de rainures, dans le cas présent, les faces latérales 251 et 252. On appliquera l'invention à toutes les rainures ayant pour faces latérales une des faces latérales du réseau et la face latérale opposée directement adjacente. On considérera donc ici la rainure 26_1 (Figure 5b) constituée par la face latérale du réseau 251 et la face latérale opposée directement adjacente à 251, 252' sur une première section à partir du point A jusqu'au point B et par la face latérale du réseau 251 et la face latérale 252 opposée directement adjacente à 251, sur une deuxième portion à partir du point B jusqu'au point C. Puis on considérera la rainure 26_2 (Figure 5c) constituée par la face latérale du réseau 252 et la face latérale 251'opposée directement adjacente à 252, sur une première section à partir du point A jusqu'au point B et la face latérale 251 opposée directement adjacente à 252, sur une deuxième portion à partir du point B jusqu'au point C. Pour des réseaux plus complexes, on généralisera cette règle de manière à ce que l'ensemble des rainures majeures possibles du réseau sensiblement dans l'orientation des faces latérales du réseau, vérifient les caractéristiques de l'invention.

La figure 6 représente schématiquement des pneumatiques montés sur des jantes de montage de roues d'un véhicule 200 et ayant un sens de montage prédéterminé sur le véhicule. Chaque pneumatique comporte un bord axial extérieur 45 et un bord axial intérieur 46, le bord axial intérieur 46 étant le bord monté du côté de la caisse du véhicule lorsque le pneumatique est monté sur le véhicule selon ledit sens de montage prédéterminé et inversement pour le bord axial extérieur 45. Dans le document « côté extérieur du véhicule » désigne le bord axial extérieur 45.

Les inventeurs ont réalisé des calculs sur la base de l'invention pour un pneumatique de dimension 205/55 R16, gonflé à une pression de 2 bars, comprenant deux couches de travail comprenant des monofilaments en acier, de diamètre 0.3 mm, répartis selon une densité de 158 fils au dm et formant, avec la direction circonférentielle, des angles égaux respectivement à 27 et -27°. Les monofilaments ont une résistance à la rupture Rₘ égale à 3500 MPa et les couches de travail ont chacune une résistance à rupture R_{c} égale à 39 000 N/dm. Le pneumatique comporte un sillon circonférentiel à 45 mm du bord de l'aire de contact et des rainures majeures axialement extérieures et débouchantes intérieurement et extérieurement de profondeur D égale à 7 mm et de largeur W égale à 5 mm, d'un pas circonférentiel de 30 mm. La distance radiale D1 entre la face de fond des rainures axialement extérieures et l'armature de sommet est au moins égale à 2 mm.

Deux pneumatiques ont été calculés, un premier A sans pont de gomme et un deuxième B muni d'un pont de gomme d'une hauteur radiale h de 5,5 mm et d'une longueur moyenne de 7 mm. Les conditions de calcul reproduisent les conditions de roulage d'un pneumatique avant côté extérieur du virage, c'est-à-dire celui qui est le plus sollicité d'un véhicule de tourisme. Ces sollicitations pour une accélération latérale de 0.7g sont les suivantes : une charge (Fz) de 710 daN, un effort latéral (Fy) de 505 daN et un carrossage de 3.0°. La présence du pont de gomme permet de réduire les contraintes de flexion dans les monofilaments de l'armature de travail, qui causent leur rupture par fatigue de 17%.

Les inventeurs ont réalisé deux pneumatiques A et B de la dimension 205/55 R16, correspondant aux pneumatiques évalués par le calcul. Ces deux pneumatiques gonflés à une pression de 2 bars, soumis à une charge (Fz) de 749 daN, un effort latéral (Fy) de 509 daN et un carrossage de 3.12° ont été testés en roulage sur un volant de 8,5 m. Le roulage est arrêté régulièrement pour une mesure non destructive pour contrôler la présence de rupture des éléments de renforcement des couches de travail. Conformément au calcul, les ruptures dans les couches de travail du pneumatique A apparaissent à un kilométrage 18% plus faible que pour le pneumatique B.

## Revendications

1. Pneumatique (1) pour véhicule de tourisme, comprenant :
• une bande de roulement (2) destinée à entrer en contact avec un sol par l'intermédiaire d'une surface de roulement (21) et ayant une largeur axiale LT,
• la bande de roulement (2) comprenant deux portions axialement extérieures (22, 23) ayant chacune une largeur axiale (LS1, LS2) au plus égale à 0.3 fois la largeur axiale LT,
• le pneumatique comprenant en outre une armature de sommet (3) radialement intérieure à la bande de roulement (2),
• l'armature de sommet (3) comprenant une armature de travail (4) et une armature de frettage (5),
• l'armature de travail (4) comprenant au moins deux couches de travail (41, 42), comprenant chacune des éléments de renforcement enrobés par un matériau élastomérique, parallèles entre eux et formant respectivement avec une direction circonférentielle (XX') du pneumatique, un angle orienté (A1, A2) au moins égal à 20° et au plus égale à 50°, en valeur absolue et de signe opposé d'une couche à la suivante,
• les dits éléments de renforcement de chaque couche de travail étant constitués par des fils métalliques unitaires ou monofilaments ayant une section dont la plus petite dimension est au moins égale à 0.20 mm et au plus égale à 0.5 mm, une résistance à la rupture Rm
• la densité d'éléments de renforcement de chaque couche de travail étant au moins égale à 100 fils par dm et au plus égale à 200 fils par dm,
• l'armature de frettage (5) comprenant au moins une couche de frettage comprenant des éléments de renforcement, parallèles entre eux et formant, avec la direction circonférentielle (XX') du pneumatique, un angle au plus égal à 10° en valeur absolue,
**caractérisé en ce qu'**au moins une portion axialement extérieure (22, 23) comprend au moins un sillon circonférentiel (24), et des rainures axialement extérieures (25), une rainure axialement extérieure (25) formant un espace débouchant sur la surface de roulement (21) et étant délimitée par au moins deux faces latérales dites principales (251, 252) reliées par une face de fond (253), faisant un angle avec la direction axiale (YY') entre plus ou moins 60°, rainures dont au moins une (26) est débouchante intérieurement, formant un espace débouchant également dans le sillon circonférentiel (24),
**en ce qu'**au moins une rainure axialement extérieure (25, 26), dite majeure, a une largeur W définie par la distance entre leurs deux faces latérales principales (251, 252), au moins égale à 1mm, une profondeur D définie par la distance radiale maximale entre la surface de roulement (21) et la face de fond (253), au moins égale à 5 mm,
**en ce que** les rainures majeures axialement extérieures et débouchantes intérieurement (26) de la bande de roulement (2) comprennent au moins un pont de gomme (27) reliant les deux faces principales (251, 252) de la rainure,
**en ce que** le au moins un pont de gomme (27) a une longueur cumulée LB au moins égale à la largeur W de la rainure (26) et une hauteur h radiale au moins égale à la moitié de la profondeur D de la rainure (26),
**en ce que** toute rainure majeure axialement extérieure (25, 26) a une profondeur D au plus égale à 8 mm,
**et en ce que** la résistance à rupture R_{C} de chaque couche de travail (41, 42) est au moins égale à 30 000 N/dm, Rc étant définie par : Rc= Rm*S*d, où Rm est la résistance à la rupture en traction des monofilaments en MPa, S la section des monofilaments en mm² et d la densité de monofilaments de la couche de travail considérée, en nombre de monofilaments par dm.

2. Pneumatique selon la revendication 1 **dans lequel** toute rainure majeure axialement extérieure (25, 26) a une largeur W au plus égale à 10 mm.

3. Pneumatique selon l'une quelconque des revendications 1 ou 2 **dans lequel** une rainure majeure axialement extérieure (25, 26) débouche axialement à l'extérieur de la bande de roulement.

4. Pneumatique selon l'une quelconque des revendications 1 à 3 **dans lequel** les rainures majeures axialement extérieures (25, 26) sont espacées, selon la direction circonférentielle (XX') du pneumatique, d'un pas circonférentiel P au moins égal à 8 mm.

5. Pneumatique selon l'une quelconque des revendications 1 à 4 **dans lequel** les rainures majeures axialement extérieures (25, 26) sont espacées, selon la direction circonférentielle (XX') du pneumatique, d'un pas circonférentiel P au plus égal à 50 mm.

6. Pneumatique selon l'une quelconque des revendications 1 à 5 **dans lequel** la face de fond (253) d'une rainure majeure axialement extérieure et débouchante intérieurement (26) est positionnée radialement à l'extérieur de l'armature de sommet (3) à une distance radiale D1 au moins égale à 1.5 mm.

7. Pneumatique selon l'une quelconque des revendications 1 à 6 **dans lequel** la face de fond (253) d'une rainure majeure axialement extérieure et débouchante intérieurement (26) est positionnée radialement à l'extérieur de l'armature de sommet (3) à une distance radiale D1 au plus égale à 3.5 mm.

8. Pneumatique selon l'une quelconque des revendications 1 à 7 **dans lequel** au moins un pont de gomme (27) d'une rainure majeure axialement extérieure et débouchante intérieurement (26), ayant une largeur Wmin au moins égale à 1,5 mm, comprend au moins une incision ayant une largeur W1 au plus égale à 1 mm et une profondeur h1 au moins égale à h/2 et au plus égale à h, h étant la hauteur radiale du pont de gomme (27).

9. Pneumatique selon l'une quelconque des revendications 1 à 8, un pont de gomme (27) d'une rainure axialement extérieure et débouchante intérieurement (26) ayant une arête axialement extérieure, **dans lequel** l'arête axialement extérieure du pont de gomme (27) comprend un chanfrein.

10. Pneumatique selon l'une quelconque des revendications 1 à 9 **dans lequel** au moins une portion axialement extérieure (23, 24), comprenant des rainures majeures axialement extérieures (25, 26), comprend des incisions (28) ayant une largeur W2 au plus égale à 1 mm.

11. Pneumatique selon l'une quelconque des revendications 1 à 10 **dans lequel** les deux portions axialement extérieures (22, 23) ont chacune une largeur axiale (LS1, LS2) au plus égale à 0.2 fois la largeur axiale LT.

12. Pneumatique selon l'une quelconque des revendications 1 à 11 **dans lequel** chaque couche de travail (41, 42) comprend des éléments de renforcement, constitués par des fils métalliques unitaires ou monofilaments ayant un diamètre au moins égal à 0.3 mm et au plus égal à 0.37 mm.

13. Pneumatique selon l'une quelconque des revendications 1 à 12 **dans lequel** chaque couche de travail (41, 42) comprend des éléments de renforcement, formant, avec la direction circonférentielle (XX') du pneumatique, un angle dont la valeur absolue est au moins égal à 22° et au plus égal à 35°.

14. Pneumatique selon l'une quelconque des revendications 1 à 13 **dans lequel** la densité d'éléments de renforcement de chaque couche de travail (41, 42) est au moins égale à 120 fils par dm et au plus égale à 180 fils par dm.

15. Pneumatique selon l'une quelconque des revendications 1 à 14 **dans lequel** les éléments de renforcement des couches de travail (41, 42) sont en acier, de préférence en acier au carbone.

16. Pneumatique selon l'une quelconque des revendications 1 à 15 **dans lequel** les éléments de renforcement de la au moins une couche de frettage sont en textile, de préférence de type polyamide aliphatique, polyamide aromatique, combinaison de polyamide aliphatique et de polyamide aromatique, polytéréphtalate d'éthylène ou rayonne.

17. Pneumatique selon l'une quelconque des revendications 1 à 16 **dans lequel** l'armature de frettage (5) est radialement extérieure à l'armature de travail (4).

## Patentansprüche

1. Reifen (1) für einen Personenkraftwagen, umfassend:
• einen Laufstreifen (2), der dazu bestimmt ist, über eine Lauffläche (21) mit einem Boden in Kontakt zu kommen, und eine axiale Breite LT aufweist,
• wobei der Laufstreifen (2) zwei axial äußere Abschnitte (22, 23) umfasst, die jeweils eine axiale Breite (LS1, LS2) aufweisen, die höchstens das 0,3-Fache der axialen Breite LT beträgt,
• wobei der Reifen außerdem eine Scheitelbewehrung (3) umfasst, die sich radial innerhalb des Laufstreifens (2) befindet,
• wobei die Scheitelbewehrung (3) eine Arbeitsbewehrung (4) und eine Versteifungsbewehrung (5) umfasst,
• wobei die Arbeitsbewehrung (4) wenigstens zwei Arbeitsschichten (41, 42) umfasst, die jeweils Verstärkungselemente (411, 421) umfassen, die von einem Elastomermaterial umhüllt sind, zueinander parallel sind und jeweils mit einer Umfangsrichtung (XX') des Reifens einen gerichteten Winkel (A1, A2) bilden, dessen absoluter Betrag mindestens gleich 20° und höchstens gleich 50° ist und dessen Vorzeichen von einer Schicht zur folgenden wechselt,
• wobei die Verstärkungselemente jeder Arbeitsschicht aus einzelnen Metalldrähten oder Monofilamenten bestehen, die einen Querschnitt, dessen kleinste Abmessung mindestens 0,20 mm und höchstens 0,5 mm beträgt, und eine Bruchfestigkeit Rm aufweisen,
• wobei die Dichte der Verstärkungselemente jeder Arbeitsschicht mindestens 100 Drähte pro dm und höchstens 200 Drähte pro dm beträgt,
• wobei die Versteifungsbewehrung (5) wenigstens eine Versteifungsschicht umfasst, die Verstärkungselemente umfasst, die zueinander parallel sind und mit einer Umfangsrichtung (XX') des Reifens einen Winkel B bilden, dessen absoluter Betrag höchstens gleich 10° ist,
**dadurch gekennzeichnet, dass** wenigstens ein axial äußerer Abschnitt (22, 23) axial äußere Rillen (24) umfasst, wobei eine axial äußere Rille (24) einen Raum bildet, der auf der Lauffläche (21) mündet und von wenigstens zwei Hauptseitenflächen (241, 242) begrenzt wird, die durch eine Bodenfläche (243) verbunden sind,
dadurch, dass wenigstens eine axial äußere Rille (24), Hauptrille genannt, eine durch den Abstand zwischen den zwei Seitenflächen (241, 242) definierte Breite W, die mindestens 1 mm beträgt, eine durch den maximalen radialen Abstand zwischen der Lauffläche (21) und der Bodenfläche (243) definierte Tiefe D, die mindestens 5 mm beträgt, und ein geradliniges mittleres Profil L aufweist, dadurch, dass das geradlinige mittlere Profil L jeder axial äußeren Hauptrille (24) wenigstens eines axial äußeren Abschnitts (22, 23) des Laufstreifens (2) mit der Umfangsrichtung (XX') des Reifens einen Winkel C bildet, der dem Intervall [min(A1, A2)+100°, max(A1, A2)+80°] angehört,
dadurch, dass der Winkel C des geradlinigen mittleren Profils L jeder axial äußeren Hauptrille (24) wenigstens eines axial äußeren Abschnitts (22, 23) des Laufstreifens (2) dem Intervall [(A1+A2)/2+80°, (A1+A2)/2+100°] angehört,
und dadurch, dass die Bruchfestigkeit R_{C} jeder Arbeitsschicht (41, 42) mindestens 30 000 N/dm beträgt, wobei Rc durch Rc = Rm*S*d definiert ist, wobei Rm die Zugfestigkeit der Monofilamente in MPa ist, S der Querschnitt der Monofilamente in mm² ist und d die Dichte der Monofilamente der betrachteten Arbeitsschicht ist, als Anzahl der Monofilamente pro dm.

2. Reifen nach Anspruch 1, wobei der Winkel C des geradlinigen mittleren Profils L jeder axial äußeren Hauptrille (24) wenigstens eines axial äußeren Abschnitts (22, 23) des Laufstreifens (2) dem Intervall [min(A1, A2)+105°, max(A1, A2)+75°] angehört.

3. Reifen nach einem der Ansprüche 1 bis 2, wobei jede axial äußere Hauptrille (24) eine Breite W aufweist, die höchstens 10 mm beträgt.

4. Reifen nach einem der Ansprüche 1 bis 3, wobei jede axial äußere Hauptrille (24) eine Tiefe D aufweist, die höchstens 8 mm beträgt.

5. Reifen nach einem der Ansprüche 1 bis 4, wobei die axial äußeren Hauptrillen (24) in der Umfangsrichtung (XX') des Reifens um eine Schrittweite in Umfangsrichtung P beabstandet sind, die mindestens 8 mm beträgt.

6. Reifen nach einem der Ansprüche 1 bis 5, wobei die axial äußeren Hauptrillen (24) in der Umfangsrichtung (XX') des Reifens um eine Schrittweite in Umfangsrichtung P beabstandet sind, die höchstens 50 mm beträgt.

7. Reifen nach einem der Ansprüche 1 bis 6, wobei die Bodenfläche (243) einer axial äußeren Hauptrille (24) radial außerhalb der Scheitelbewehrung (3) in einem radialen Abstand D1 positioniert ist, der mindestens 1,5 mm beträgt.

8. Reifen nach einem der Ansprüche 1 bis 7, wobei die Bodenfläche (243) einer axial äußeren Hauptrille (24) radial außerhalb der Scheitelbewehrung (3) in einem radialen Abstand D1 positioniert ist, der höchstens 3,5 mm beträgt.

9. Reifen nach einem der Ansprüche 1 bis 8, wobei wenigstens ein axial äußerer Abschnitt (23, 24), der axial äußere Hauptrillen (24) umfasst, Einschnitte (25) mit einer Breite W1 umfasst, die höchstens 1 mm beträgt.

10. Reifen nach einem der Ansprüche 1 bis 9, wobei die zwei axial äußeren Abschnitte (22, 23) jeweils eine axiale Breite (LS1, LS2) aufweisen, die höchstens das 0,2-Fache der axialen Breite LT des Laufstreifens (2) beträgt.

11. Reifen nach einem der Ansprüche 1 bis 10, wobei die Winkel (A1, A2) der jeweiligen Verstärkungselemente (411, 421) der Arbeitsschichten (41, 42) den gleichen absoluten Betrag haben.

12. Reifen nach einem der Ansprüche 1 bis 11, wobei jede Arbeitsschicht (41, 42) Verstärkungselemente (411, 421) umfasst, die mit der Umfangsrichtung (XX') des Reifens einen Winkel (A1, A2) bilden, der mindestens 22° und höchstens 35° beträgt.

13. Reifen nach einem der Ansprüche 1 bis 12, wobei jede Arbeitsschicht (41, 42) Verstärkungselemente (411, 421) umfasst, die aus einzelnen Metalldrähten oder Monofilamenten bestehen, die einen Durchmesser aufweisen, der mindestens 0,3 mm und höchstens 0,37 mm beträgt.

14. Reifen nach einem der Ansprüche 1 bis 13, wobei die Verstärkungselemente der Arbeitsschichten (41, 42) aus Stahl bestehen, vorzugsweise aus Kohlenstoffstahl.

15. Reifen nach einem der Ansprüche 1 bis 14, wobei die Dichte der Verstärkungselemente jeder Arbeitsschicht mindestens 120 Drähte pro dm und höchstens 180 Drähte pro dm beträgt.

16. Reifen nach einem der Ansprüche 1 bis 15, wobei die Verstärkungselemente der wenigstens einen Versteifungsschicht aus textilem Material bestehen, vorzugsweise vom Typ eines aliphatischen Polyamids, eines aromatischen Polyamids, einer Kombination von aliphatischem Polyamid und aromatischem Polyamid, aus Ethylenpolyterephthalat oder Kunstseide.

17. Reifen nach einem der Ansprüche 1 bis 16, wobei sich die Versteifungsbewehrung (5) radial außerhalb der Arbeitsbewehrung (4) befindet.

## Claims

1. Tyre (1) for a passenger vehicle, comprising:
• a tread (2) intended to come into contact with the ground via a tread surface (21) and having an axial width LT,
• the tread (2) comprising two axially exterior portions (22, 23) each having an axial width (LS1, LS2) at most equal to 0.3 times the axial width LT,
• the tyre further comprising a crown reinforcement (3) radially on the inside of the tread (2),
• the crown reinforcement (3) comprising a working reinforcement (4) and a hoop reinforcement (5),
• the working reinforcement (4) comprising at least two working layers (41, 42) each comprising reinforcing elements (411, 421) which are coated in an elastomeric material, mutually parallel and respectively form, with a circumferential direction (XX') of the tyre, an oriented angle (A1, A2) at least equal to 20° and at most equal to 50°, in terms of absolute value, and of opposite sign from one layer to the next,
• the said reinforcing elements in each working layer being made up of individual metal threads or monofilaments having a cross section the smallest dimension of which is at least equal to 0.20 mm and at most equal to 0.5 mm, and a breaking strength Rm,
• the density of reinforcing elements in each working layer being at least equal to 100 threads per dm and at most equal to 200 threads per dm,
• the hoop reinforcement (5) comprising at least one hooping layer comprising reinforcing elements which are mutually parallel and form, with the circumferential direction (XX') of the tyre, an angle B at most equal to 10°, in terms of absolute value,
**characterized in that** at least one axially exterior portion (22, 23) comprising axially exterior grooves (24), an axially exterior groove (24) forming a space opening onto the tread surface (21) and being delimited by at least two main lateral faces (241, 242) connected by a bottom face (243),
**and in that** at least one axially exterior groove (24), referred to as major groove, having a width W, defined by the distance between the two lateral faces (241, 242), at least equal to 1 mm, a depth D, defined by the maximum radial distance between the tread surface (21) and the bottom face (243), at least equal to 5 mm, and a mean linear profile L,
**and in that** the mean linear profile L of any axially exterior major groove (24) of at least one axially exterior portion (22, 23) of the tread (2) forms, with the circumferential direction (XX') of the tyre, an angle C belonging to the interval [min(A1,A2)+100°, max(A1, A2)+80°],
**and in that** the angle C of the mean linear profile L of any axially exterior major groove (24) of at least one axially exterior portion (22, 23) of the tread (2) belongs to the interval [(A1+A2)/2+80°, (A1+A2)/2+100°],
**and in that** the breaking strength R_{C} of each working layer (41, 42) is at least equal to 30 000 N/dm, Rc being defined by : Rc= Rm*S*d, where Rm is the tensile breaking strength of the monofilaments in MPa, S is the cross-sectional area of the monofilaments in mm² and d is the density of monofilaments in the working layer considered, in number of monofilaments per dm.

2. Tyre according to any one of Claim 1, **in which** the angle C of the mean linear profile L of any axially exterior major groove (24) of at least one axially exterior portion (22, 23) of the tread (2) belongs to the interval [min(A1,A2)+105°, max(A1, A2)+75°].

3. Tyre according to any one of Claims 1 to 2, **in which** any axially exterior major groove (24) has a width W at most equal to 10 mm.

4. Tyre according to any one of Claims 1 to 3, **in which** any axially exterior major groove (24) has a depth D at most equal to 8 mm.

5. Tyre according to any one of Claims 1 to 4, **in which** the axially exterior major grooves (24) are spaced apart, in the circumferential direction (XX') of the tyre, by a circumferential spacing P at least equal to 8 mm.

6. Tyre according to any one of Claims 1 to 5, **in which** the axially exterior major grooves (24) are spaced apart, in the circumferential direction (XX') of the tyre, by a circumferential spacing P at most equal to 50 mm.

7. Tyre according to any one of Claims 1 to 6, **in which** the bottom face (243) of an axially exterior major groove (24) is positioned radially on the outside of the crown reinforcement (3) at a radial distance D1 at least equal to 1.5 mm.

8. Tyre according to any one of Claims 1 to 7, **in which** the bottom face (243) of an axially exterior major groove (24) is positioned radially on the outside of the crown reinforcement (3) at a radial distance D1 at most equal to 3.5 mm.

9. Tyre according to any one of Claims 1 to 8, **in which** at least an axially exterior portion (23, 24), comprising axially exterior major grooves (24), comprises sipes (25) having a width W1 at most equal to 1 mm.

10. Tyre according to any one of Claims 1 to 9, **in which** the two axially exterior portions (22, 23) each have an axial width (LS1, LS2) at most equal to 0.2 times the axial width LT of the tread (2).

11. Tyre according to any one of Claims 1 to 10, **in which** the angles (A1, A2) of the respective reinforcing elements (411, 421) of the working layers (41,42) are equal in terms of absolute value.

12. Tyre according to any one of Claims 1 to 11, **in which** each working layer (41, 42) comprises reinforcing elements (411, 421) which form, with the circumferential direction (XX') of the tyre, an angle (A1, A2) at least equal to 22° and at most equal to 35°.

13. Tyre according to any one of Claims 1 to 12, **in which** each working layer (41, 42) comprises reinforcing elements (411, 421) made up of individual metal threads or monofilaments having a diameter at least equal to 0.3 mm and at most equal to 0.37 mm.

14. Tyre according to any one of Claims 1 to 13, **in which** the reinforcing elements of the working layers (41, 42) are made of steel, preferably carbon steel.

15. Tyre according to any one of Claims 1 to 14, **in which** the density of reinforcing elements in each working layer is at least equal to 120 threads per dm and at most equal to 180 threads per dm.

16. Tyre according to any one of Claims 1 to 15, **in which** the reinforcing elements of the at least one hooping layer are made of textile, preferably of aliphatic polyamide, aromatic polyamide or combination of aliphatic polyamide and of aromatic polyamide, polyethylene terephthalate or rayon type.

17. Tyre according to any one of Claims 1 to 16, **in which** the hoop reinforcement (5) is radially on the outside of the working reinforcement (4).
